# FASCICULE DE BREVET EUROPEEN

(11) **EP 2 630 465 B1**
(45) Date de publication et mention de la délivrance du brevet: **14.01.2015**
(21) Numéro de dépôt: 11770083.1
(22) Date de dépôt: 06.10.2011
(51) Int. Cl.: G06T 7/00, G01M 17/02

(54) **METHODE D'IDENTIFICATION ET DE LIMITATION DES MOTIFS DE BASE FORMANT LA SCULPTURE DE LA BANDE DE ROULEMENT D'UN PNEUMATIQUE**
VERFAHREN ZUR ERMITTLUNG UND DEFINITION VON GRUNDSTRUKTUREN FÜR DEN ENTWURF DES PROFILDESIGNS EINES REIFENS
METHOD FOR IDENTIFYING AND DEFINING BASIC PATTERNS FORMING THE TREAD DESIGN OF A TYRE

(30) Priorité: 19.10.2010 FR 1058524
(43) Date de publication de la demande: 28.08.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: JOLY, Alexandre, F-63040 Clermont-Ferrand Cedex 9 (FR); ZANELLA, Jean-Paul, F-63040 Clermont-Ferrand Cedex 9 (FR)
(74) Mandataire: Roussy, Delphine
(86) Numéro de dépôt international: PCT/EP2011/067470
(87) Numéro de publication internationale: WO 2012/052300

(56) Documents cités:
- WO-A1-2009/077537
- WO-A2-2012/045983

## Description

L'invention concerne le domaine du contrôle visuel des pneumatiques dans lequel on compare l'image d'un pneumatique à inspecter avec une image de référence de ce pneumatique.

La comparaison de ces deux images permet, par analyse des différences, de déterminer en un point donné de l'image, les variations de la valeur d'une grandeur physique affectée à ce point et issue d'un capteur d'image généralement numérique. Les grandeurs physiques mesurées par le capteur peuvent être relatives à la couleur, à la brillance, à la texture de l'objet observé ou encore à la hauteur des points par rapport à une surface de référence, lorsque l'on utilise un matériel apte à créer une image en trois dimensions.

Ces variations sont analysées à l'aide d'algorithmes ne faisant pas l'objet de la présente description, et adaptés pour déterminer le degré de conformité du pneumatique à inspecter, et décider si ce pneumatique peut être considéré comme conforme ou s'il doit être orienté vers un centre de traitement.

Dans le cas du pneumatique, cette technique s'applique pour le contrôle des zones du pneumatique obtenues par moulage à partir d'une empreinte rigide du flanc ou de la bande de roulement.

La publication WO2009077537 décrit une méthode spécialement adaptée à l'inspection des bandes de roulement de pneumatiques dont la sculpture est formée par l'assemblage d'éléments ayant des motifs de base, en nombre réduits, juxtaposés circonférentiellement et séquencés de manière précise et déterminée.

Les motifs de base de la sculpture ont des formes similaires et ont des dimensions proches mais pas totalement identiques. Chaque type de motif de base apparaît donc plusieurs fois sur la circonférence de la sculpture de l'enveloppe. Le choix des dimensions et l'agencement des motifs de base sont fait de manière judicieuse et connue de l'homme du métier, dans le but de réduire les vibrations ou les bruits de roulement.

L'objet de la méthode décrite dans la publication citée ci-dessus consiste à comparer les images de référence des seuls motifs de base, à l'image des motifs de base réels disposés sur la circonférence du pneumatique.

Il suffit alors d'acquérir l'image de la bande de roulement d'un seul pneumatique pour obtenir une collection d'images suffisante de chacun des motifs de base, et pour calculer les images de référence de ces motifs de base en faisant l'hypothèse qu'une anomalie n'est pas susceptible de se reproduire sur l'ensemble des éléments ayant un motif de base identique.

Aussi, en préalable à la mise en oeuvre de cette méthode, il est nécessaire de d'identifier et de localiser de manière précise les limites entre les éléments formant la sculpture.

La présente invention a pour objet de proposer une méthode permettant de résoudre ce problème.

La méthode d'inspection de la bande selon l'invention est destinée à l'inspection de la bande de roulement d'un pneumatique dont la sculpture est formée par l'assemblage d'éléments juxtaposés circonférentiellement, séparés entre eux par des frontières de formes identiques, et ayant des motifs de base, en nombre réduit séquencés de manière précise et connue, comportant au moins un motif de base sur lequel sont disposés des témoins d'usure auxquels sont associés un point caractéristique de ce motif de base.

Cette méthode comprend les étapes suivantes au cours desquelles :
- on réalise une image de la bande de roulement du pneumatique à inspecter,
- on identifie les témoins d'usure présents sur l'image de la bande de roulement du pneumatique à inspecter,
- on regroupe les témoins d'usure par sous-ensembles correspondant au motif de base comportant des témoins d'usure et on détermine le point caractéristique de chacun de ces sous-ensembles,
- on détermine une séquence de distances en calculant les distances entre les points caractéristiques de chacun des sous-ensembles de témoins d'usure identifiés sur la surface de la bande de roulement à inspecter,
- on fait coïncider cette séquence de distances avec la séquence connue des distances entre les points caractéristiques des motifs de base,
- on projette sur la surface à inspecter la forme de la frontière entre les éléments juxtaposés circonferentiellement selon la séquence connue de positionnement desdits éléments.

L'intérêt de cette méthode est qu'elle permet d'identifier de manière certaine la séquence des éléments de la sculpture de la bande de roulement du pneumatique à inspecter et d'affecter à chaque élément le motif de base lui correspondant. Cette méthode présente également l'avantage d'être peu gourmande en temps de calcul en comparaison des méthodes de recalage ou de superposition par optimisation des distances des contours des motifs de la sculpture.

Une fois cette étape achevée on peut mettre en oeuvre sans difficulté une méthode d'évaluation telle que décrite par exemple dans la publication WO2009077537.

En règle générale la sculpture comprend un seul motif de base comportant des témoins d'usure.

Selon une première forme d'exécution de la méthode, l'identification des témoins d'usure se fait à partir d'imagettes de référence des témoins d'usure adaptées à la dimension à inspecter.

Selon une seconde forme d'exécution de la méthode, l'identification des témoins d'usure se fait à partir du modèle numérique servant de base à la définition de la sculpture du pneumatique.

Pour limiter le temps de calcul et augmenter la fiabilité de la recherche, on peut limiter la recherche des témoins d'usure à des bandes circonférentielles étroites encadrant sensiblement les sillons de la sculpture dans lesquels sont situés lesdits témoins d'usure.

Il peut s'avérer nécessaire de déformer l'image des témoins d'usure du modèle numérique selon les paramètres de calibration des moyens d'acquisition de l'image de la bande de roulement du pneumatique à inspecter avant de procéder à l'identification des témoins d'usure.

Pour affiner la recherche et améliorer la mise en correspondance des formes des témoins d'usure, on peut utilement déformer l'image des témoins d'usure du modèle numérique en appliquant une transformation affine.

La méthode permet également d'évaluer l'écart entre la position transversale des points caractéristiques des éléments contenant des témoins d'usure par rapport à une direction longitudinale de manière à déterminer le voile du pneumatique sur l'ensemble de sa circonférence.

On peut alors corriger la position transversale des frontières entre éléments en fonction de la valeur du voile du pneumatique à ce point de sa circonférence.

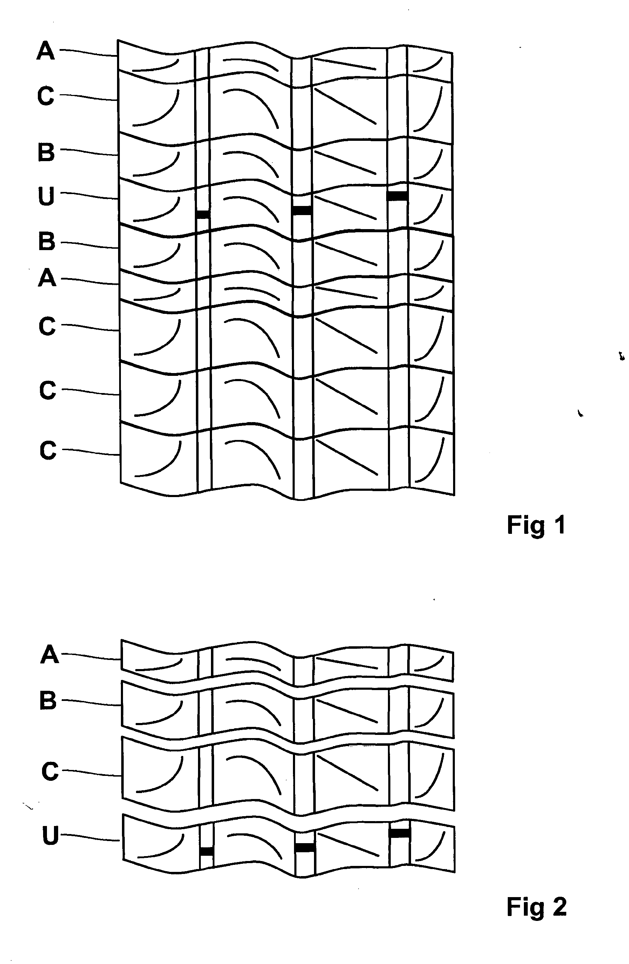

La description qui suit permettra de mieux comprendre l'invention et ses variantes de mise en oeuvre et s'appuie sur les figures 1 à dans lesquelles :
- la figure 1 représente une vue schématique d'une bande de roulement formée de la juxtaposition d'éléments ayant des motifs de base,
- la figure 2 représente les quatre motifs de base utilisés pour élaborer la sculpture illustrée à la figure 1,
- la figure 3 représente des imagettes en 2D de témoins d'usure de référence,
- la figure 4 représente une prise de vue en 2D de la surface de la bande de roulement d'un pneumatique à inspecter comportant un motif de base comprenant des témoins d'usure,
- la figure 5 représente une vue provenant d'une image 3D des témoins d'usure issue du modèle numérique servant de base à la définition de la sculpture du pneumatique,
- la figure 6 représente un exemple de témoins d'usure repérés sur l'image 3D de la bande de roulement du pneumatique à inspecter,
- la figure 7 illustre un exemple de calcul d'un centre de gravité d'un motif de base contenant des témoins d'usure,
- les figures 8 et 9 illustrent les opérations de correction qu'il est possible de réaliser en cas de détection à tord ou d'erreur de détection,
- la figure 10 illustre l'opération de synchronisation des séquences de distance entre les éléments de sculpture formés d'un motif de base comprenant des témoins d'usure,
- la figure 11 illustre l'opération de projection des frontières entre les motifs de base,
- la figure 12 illustre les variations transversales liées à la mise en évidence du voile du pneumatique.

La figure 1 permet de visualiser une portion de bande de roulement de pneumatique, sur laquelle on observe la présence de plusieurs types de motifs de base, notés respectivement A, B, C et U. Ces types de motifs de bases sont représentés individuellement à la figure 2, et comprennent par exemple 3 motifs A, B et C de longueurs différentes, et un motif U contenant les témoins d'usure. Ces quatre types de motif de base vont se répéter, selon une séquence précise, tout au long de la circonférence du pneumatique.

Ainsi, la séquence de la portion de bande de roulement illustrée à la figure 1 est une séquence notée ACBUBACCC. Et, pour une dimension donnée de cette gamme de pneumatique la séquence finale sera formée par la juxtaposition de ces quatre types de motif de base, agencés selon une séquence complexe et connue, débutant par ACBUBACCC et se poursuivant par exemple par les motifs BCAABUAABCBCBAAABBUCACAACBAACBBAU etc...

Une dimension peut compter, en règle générale, de un à cinq motifs de base, et une bande de roulement comprend, selon les diamètres, la répétition de quatre vingt à cent cinquante motifs de base, agencés selon la séquence désirée. Il en résulte qu'un type de motif de base donné, par exemple le motif de base A, sera utilisé, selon les dimensions et le type de sculpture, entre dix à quarante fois par bande de roulement.

La forme des frontières transversales de chacun des types de motifs de base est adaptée pour pouvoir épouser indistinctement la frontière transversale d'un motif de base quelconque d'un autre type. Aussi, la forme de ces frontières est identique quel que soit le motif de base considéré pour permettre de modifier à la demande la séquence des motifs de base.

Les motifs de base représentés à la figure 2 occupent toute la largeur transversale de la bande de roulement. Cette disposition n'est pas limitative, et les principes de l'invention peuvent s'étendre au cas où la sculpture comporterait plusieurs motifs de base différents disposés sur une même transversale. C'est le cas en particulier des sculptures dites asymétriques.

Le motif de base noté U comporte des témoins d'usure placés dans le sillon longitudinal. Ce motif de base particulier est en règle général unique, et peut être reproduit autant de fois que nécessaire dans le séquencement des motifs de base de la sculpture. C'est de cette particularité dont on va se servir pour déterminer les frontières entre les éléments de la sculpture en considérant par ailleurs que la présence des témoins d'usure est obligatoire quelle que soit le type de sculpture.

La première opération à effectuer consiste donc à réaliser une image de la surface de la bande de roulement du pneumatique à inspecter.

On entend par image, l'information issue d'un ou plusieurs capteurs sensibles à la lumière réfléchie, en un point donné, par le pneumatique à examiner. Cette image peut être bi ou tri dimensionnelle, à niveau gris, monochrome, ou en couleur. Elle peut être issue d'une caméra linéaire, d'une caméra matricielle à niveau de gris ou en couleur ou encore de capteurs à triangulation laser etc... A chaque pixel de l'image est associée la valeur d'une ou plusieurs grandeurs physiques. Une image se présente alors sous la forme d'autant de tableaux de données que de grandeurs physiques mesurées.

L'étape suivante consiste alors à identifier les témoins d'usure présents sur l'image de la bande de roulement du pneumatique à inspecter.

La présente description se limitera à l'exposé de deux méthodes possibles pour exécuter cette opération.

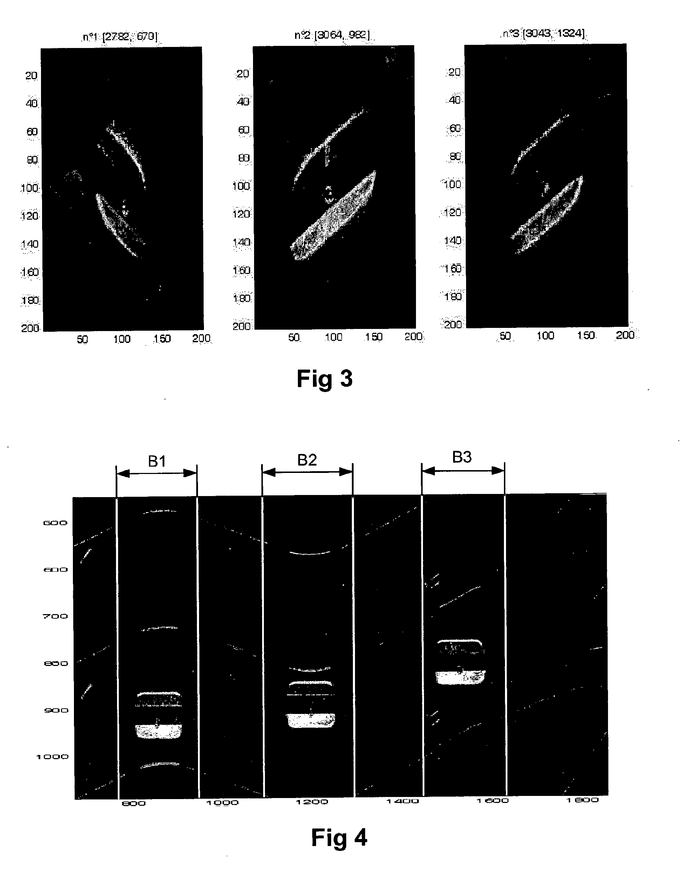

Une première méthode, particulièrement bien adaptée au traitement des données en deux dimensions, consiste à acquérir manuellement des imagettes de référence des témoins d'usure présents sur la bande de roulement d'un pneumatique de la même dimension considéré comme pneumatique de référence. Il serait également possible d'utiliser des imagettes ou des modèles 3D de témoins d'usure dont la forme est identique ou suffisamment proche de celle des témoins d'usure de la dimension à inspecter, lorsque par exemple ces imagettes sont issues de pneumatique de la même gamme mais de dimension différentes. Ces images, représentées à la figure 3, sont alors stockées en mémoire.

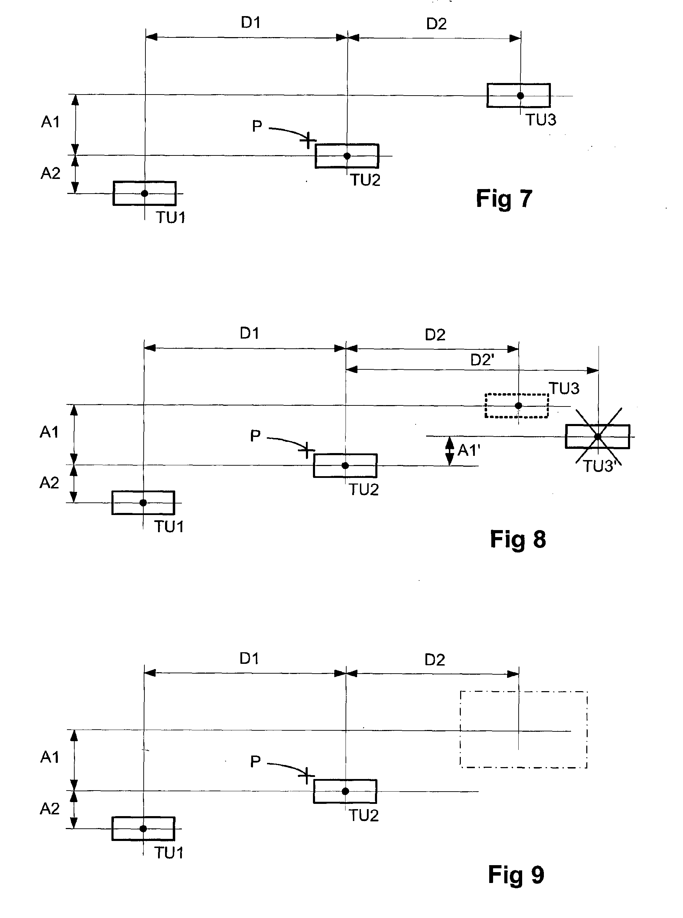

Au cours de cette phase d'apprentissage, il est également possible, pour un même motif de base, de mémoriser d'autres informations (illustrées à la figure 7), telles que :
- les positions individuelles des témoins d'usure TU1, TU2, TU3,
- les distances entre les témoins d'usure (A1, A2, D1, D2),
- la position d'un point caractéristique P du sous ensemble de témoins d'usure appartenant audit motif de base comportant les témoins d'usure ; on entend ici par point caractéristique, un point significatif définit conventionnellement pour la dimension de pneumatique et facilement identifiable à partir du sous ensemble de témoins d'usure appartenant au motif de base comportant les témoins d'usure. Ce point caractéristique peut être à titre d'exemple le centre de gravité des surfaces des témoins d'usure, ou encore du centre de ces surfaces ou tout autre point obtenu à partir de l'image d'un seul ou de plusieurs témoins d'usure appartenant audit motif de base comportant les témoins d'usure.
- La forme de découpe d'un élément correspondant aux frontières de l'élément ou du motif de base, ainsi que la position relative de ces frontières, par rapport aux témoins d'usure et par rapport au point caractéristique,

Certaines de ces informations, qui peuvent être extraites directement des données de conception du moule, seront utiles par la suite pour rendre plus robuste l'identification des témoins d'usure sur la surface à inspecter.

On mémorise également :
- les distances circonférentielles séparant les motifs de base U comportant les témoins d'usure TU et qui correspond à la distance circonférentielle entre les points caractéristiques P desdits motifs de base U comportant les témoins d'usure. Ces distances sont la signature d'une séquence particulière correspondant à l'ordonnancement circonférentiel des éléments de base puisque la distribution des motifs de base entre deux motifs contenant des témoins d'usure est connue,
- Les distances circonférentielle entre les frontières de chaque élément correspondant sensiblement à la longueur circonférentielle d'un motif de base.

La recherche des témoins d'usure sur l'image de la circonférence du pneumatique à inspecter se fait de manière ciblée en orientant la recherche sur des bandes étroites encadrant sensiblement les sillons dans lesquels sont situés les témoins d'usure, et telles qu'illustrées à titre d'exemple à la figure 4 (B1, B2, B3). Chaque bande recouvre l'image de l'ensemble de la circonférence de la bande de roulement. Cette recherche ciblée permet de réduire le temps de traitement de l'image et de réduire les risques d'erreur.

La recherche des témoins d'usure dans ces bandes se fait en recherchant par exemple une corrélation entre les niveaux de gris de l'imagette et les niveaux de gris de l'image de la surface de la bande de roulement. Cette méthode est décrite de manière détaillée dans l'ouvrage «ELE 3700 Analyse des signaux » de l'Ecole Polytechnique de Montréal.

Une autre méthode plus adaptée au cas des images de la surface de la bande de roulement en trois dimensions peut aussi être utilisée pour identifier les témoins d'usure, lorsque le détail du relief des témoins d'usure est connu.

On utilise pour ce faire les données extraites du modèle numérique utilisé pour définir le relief de la bande de roulement. Ce modèle peut être formé par exemple par le modèle numérique CAO utilisé pour la réalisation du moule de cuisson.

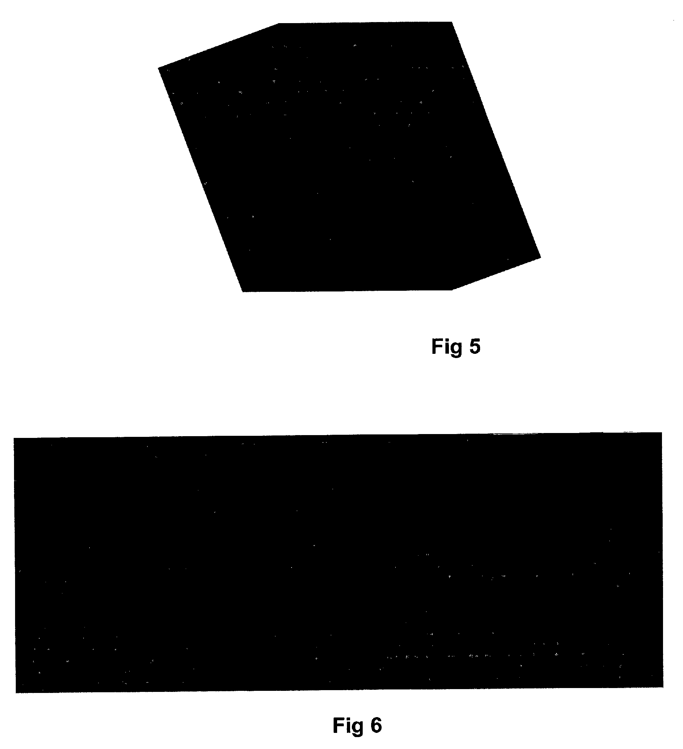

On recherche alors la forme des contours des témoins d'usure. On observera ici que la forme des témoins d'usure du modèle CAO d'un motif de base contenant des témoins d'usure, telle qu'illustrée à la figure 5, ne correspond pas de manière exacte à la forme des témoins d'usure telle qu'elle apparaît sur le pneumatique monté et gonflé sur une jante. Il peut donc s'avérer utile de déformer ce modèle en recherchant les paramètres d'une transformation affine permettant d'optimiser les écarts de distance entre les contours des témoins d'usure issus de l'image CAO et les contours des témoins d'usure d'une image réelle obtenue sur un pneumatique de référence. Cette transformation affine est alors mémorisée et peut être utilisée pour tous les pneumatiques de la même dimension comme point de départ. Il est toutefois possible d'affiner encore cette transformation si nécessaire en fonction de chaque pneumatique à inspecter.

La détection des témoins d'usure se fait alors en projetant à nouveau, comme cela est illustré à la figure 6, la forme transformée comme décrit ci-dessus des témoins d'usure d'un motif de base sur l'image de la bande de roulement, et en recherchant les zones de l'image de la bande de roulement du pneumatique à inspecter dans lesquelles ces contours sont reproduits. Cette recherche peut se faire en utilisant la même méthode de corrélation que précédemment mais en utilisant cette fois les contours comme référence.

Après avoir repéré les témoins d'usure sur la bande de roulement, on regroupe les témoins d'usure par sous ensemble. Le sous-ensemble est déterminé par le nombre et la disposition des témoins d'usure présents sur le motif de base (U) contenant les témoins d'usure.

On peut donc définir une zone de dimension donnée et connue à l'avance dans laquelle la probabilité de trouver des témoins d'usure est élevée. Et, pour chaque témoin d'usure détecté on va s'assurer de la présence du nombre et de la position attendue des témoins d'usure situés à proximités et situés dans ladite zone de la forme prédéterminée. Cette opération a pour objet de regrouper les témoins d'usure appartenant à un élément ayant pour motif de base le motif de base contenant les témoins d'usure.

On observera que dans le cas ou l'on choisi le deuxième mode d'identification des témoins d'usure, ce regroupement est quasi instantané, puisque la recherche a été exécutée en utilisant un masque correspondant à la disposition précise des témoins d'usure dans le motif de base en contenant.

Certaines difficultés peuvent apparaître lorsque deux motifs de base contenant des témoins d'usure sont situés l'un à coté de l'autre. Le regroupement des témoins d'usure par sous ensemble nécessite alors une étape supplémentaire de manière à éviter les regroupements à tord.

Aussi lorsque l'identification de tous les témoins d'usure d'un sous-ensemble n'a pas été effectuée correctement ou dans le cas de figure exposé au paragraphe précédent, il peut être utile, après avoir tenté d'opérer cette étape de regroupement en sous ensemble des témoins d'usure présents sur l'image de la bande de roulement à inspecter, de réaliser une ou plusieurs opération de vérification dans le but d'éliminer les détections à tord ou les absences de détection ainsi que les regroupements à tord.

A cet effet, pour un sous ensemble donné, on calcule les distances significatives (A1, A2, D1, D2) de la position respective des témoins d'usure telles qu'illustrées à la figure 7.

Lorsqu'une ou plusieurs de ces distances ne correspond pas avec les distances de référence établies sur la base de la position des témoins d'usure du motif de base et mémorisées comme décrit précédemment, on peut soupçonner une erreur de détection et approfondir la recherche.

La figure 8 illustre le cas dans lequel un témoin d'usure (TU3') a été détecté à une place erronée. Dans ce cas de figure on relance une analyse de la zone dans laquelle devrait se situer ce témoin d'usure, comme cela est illustré à la figure 9, avec une tolérance d'acceptation plus faible. Il en est de même lorsque aucun témoin d'usure n'est détecté dans une zone où il est logiquement attendu.

A l'issue de cette étape de regroupement des témoins d'usure par sous ensemble on est capable de calculer pour chacun des sous ensemble la position du point caractéristique selon la définition qui en a été donné plus haut. Puis, connaissant la position de ces points caractéristiques on peut calculer la distance circonférentielle les séparant deux à deux.

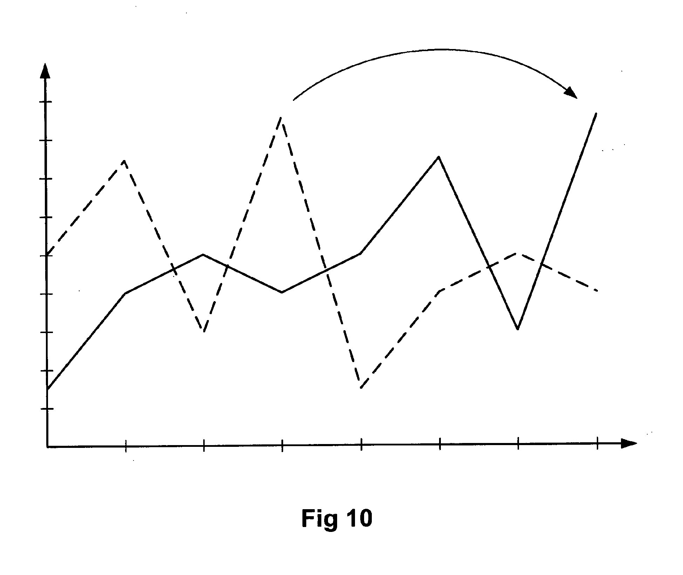

L'étape suivante de la mise en oeuvre de la méthode selon l'invention consiste alors à faire coïncider la séquence des distances mesurée sur l'image de la surface de la bande de roulement à inspecter avec la séquence des distances circonférentielle connue et mémorisée comme cela est illustré à la figure 10, où il convient de décaler la séquence de quatre pas pour faire correspondre exactement les deux séquences. Il en résulte une mise en correspondance des points caractéristiques de tous les éléments de la sculpture comportant des témoins d'usure.

La dernière étape de la mise en oeuvre du procédé selon l'invention consiste alors à projeter la forme de la frontière entre les éléments selon la séquence connue de positionnement desdits éléments les uns par rapport aux autres.

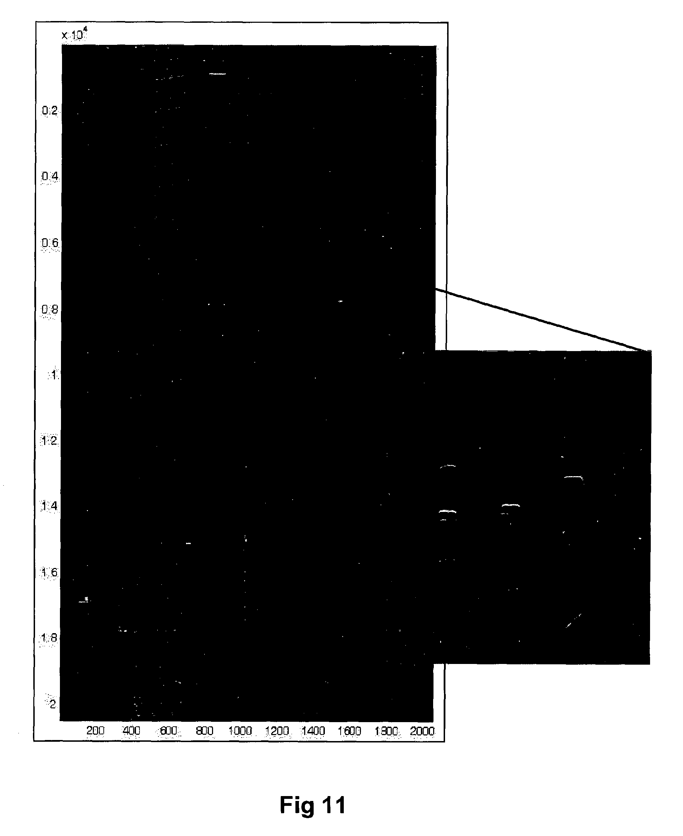

On positionne d'abord la frontière des éléments comportant des témoins d'usure par rapport aux points caractéristiques de chacun de ces éléments. Puis, en s'appuyant sur la séquence connue de positionnement des motifs de base et sur la longueur circonférentielle de chacun de ces motifs, on positionne la frontière entre chacun des éléments constituant la sculpture de la bande de roulement à inspecter comme cela est illustré à la figure 11.

La méthode décrite ci-dessus offre également la possibilité d'ajuster la position transversale des frontières. On constate en effet que, en sortie de presse et plus particulièrement lors de la mise en pression du pneumatique monté sur une jante, les déformations des nappes de renfort constituant la ceinture sommet imposent des déplacements transversaux de la bande de roulement plus communément désignés sous le vocable de voile circonférentiel.

L'image de la bande de roulement du pneumatique à inspecter reproduit ces légers mouvements par rapport à la direction longitudinale. Il convient donc de modifier la position transversale des frontières en tenant compte de ce phénomène, en particulier lorsque le contrôle de la bande de roulement du pneumatique à inspecter se fait à partir du pneumatique monté sur jante et gonflé.

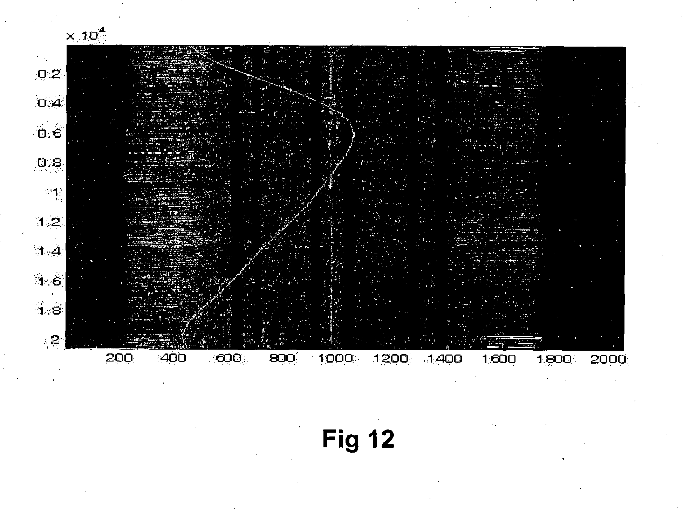

A cet effet, on évalue l'écart entre la position transversale des points caractéristiques de chacun des motifs de base contenant les témoins d'usure et une droite orientée selon la direction longitudinale. On corrige alors de la valeur de ces écarts la position transversale de la frontière des éléments contenant ces témoins d'usure. La correction transversale de la position des frontières des éléments de base situés entre deux éléments de base contenant des témoins d'usure consécutifs est corrigée par extrapolation, par exemple de manière proportionnelle à la différence des écarts transversaux de ces deux éléments de base contenant des témoins d'usure comme cela est illustré à la figure 12.

A l'issue de cette étape de détermination des frontières entre les éléments de base, on est à même de former des collections d'image représentant un même motif de base en découpant l'image de la surface de la bande de roulement en autant de zones élémentaires que d'éléments présents dans la sculpture.

On fera remarquer ici que cette méthode peut s'appliquer indistinctement au cas des sculptures dans lesquelles les limites entre les frontières ont toutes une forme identiques, ce qui est le plus fréquent, comme au cas des sculpture dans lesquelles les formes des frontières sont différentes d'un motif de base à un autre. Dans ce cas, la connaissance de la position des témoins d'usure permet de manière similaire à ce qui a été exposé ci-dessus de placer les frontières selon la forme prédéterminée à la place convenue.

Il peut s'avérer intéressant de procéder au recalage plus fin des images d'un même type de motif de base, de manière à ce que des motifs, des points caractéristiques tels que des éléments de contour, ou des frontières de zone, préalablement identifiés, se superposent au mieux. Ce recalage s'effectue par déformation locale pour faire correspondre ces motifs, ces éléments de contour ou ces frontières de zone.

Il est alors possible de comparer les images de chacune de ces collections d'image avec l'image de référence du motif de base qui leur est attaché. Cette image de référence peut être une image issue du modèle CAO de la sculpture ou encore une image moyenne calculée à partir de la collection d'image d'un motif de base comme cela est décrit dans la publication WO2009077537.

## Revendications

1. Méthode d'inspection de la bande de roulement d'un pneumatique dont la sculpture est formée par l'assemblage d'éléments juxtaposés circonférentiellement, séparés entre eux par des frontières de formes identiques, et ayant des motifs de base (A, B, C, U), en nombre réduit séquencés de manière précise et connue, comportant au moins un motif de base (U) sur lequel sont disposés des témoins d'usure (TU₁, TU₂, TU₃) auxquels sont associés un point caractéristique de ce motif de base, dans laquelle :
- on réalise une image de la bande de roulement du pneumatique à inspecter, la méthode étant **caractérisée en ce que**:
- on identifie les témoins d'usure (TU₁, TU₂, TU₃) presents sur l'image de la bande de roulement du pneumatique à inspecter,
- on regroupe les témoins d'usure par sous-ensembles correspondant au motif de base (U) comportant des témoins d'usure et on détermine le point caractéristique (P) de chacun de ces sous-ensembles,
- on détermine une séquence de distances en calculant les distances entre les points caractéristiques (P) de chacun des sous-ensembles de témoins d'usure identifiés sur la surface de la bande de roulement à inspecter,
- on fait coïncider cette séquence de distances avec la séquence connue des distances entre les points caractéristiques des motifs de base,
- on projette sur la surface à inspecter la forme de la frontière entre les éléments juxtaposés circonférentiellement selon la séquence connue de positionnement desdits éléments.

2. Méthode d'inspection selon la revendication 1 dans laquelle un seul motif de base comporte des témoins d'usure.

3. Méthode d'inspection selon la revendication 1 dans laquelle l'identification des témoins d'usure se fait à partir d'imagettes de référence des témoins d'usure adaptées à la dimension à inspecter.

4. Méthode d'inspection selon la revendication 1 dans laquelle l'identification des témoins d'usure se fait à partir du modèle numérique servant de base à la définition de la sculpture du pneumatique.

5. Méthode d'inspection dans laquelle on limite la recherche des témoins d'usure à des bandes circonférentielles étroites encadrant sensiblement les sillons de la sculpture dans lesquels sont situés lesdits témoins d'usure.

6. Méthode d'inspection selon la revendication 4 dans laquelle on déforme l'image des témoins d'usure du modèle numérique selon les paramètres de calibration des moyens d'acquisition de l'image de la bande de roulement du pneumatique à inspecter.

7. Méthode d'inspection selon la revendication 4 dans laquelle on déforme l'image des témoins d'usure du modèle numérique en appliquant une transformation affine.

8. Méthode d'inspection selon l'une des revendications 1 à 6, dans laquelle on évalue l'écart entre la position transversale des points caractéristiques des éléments contenant des témoins d'usure par rapport à une direction longitudinale de manière à déterminer le voile du pneumatique sur l'ensemble de sa circonférence.

9. Méthode d'inspection selon la revendication 7 dans laquelle on corrige la position transversale des frontières entre éléments en fonction de la valeur du voile du pneumatique à ce point de sa circonférence.

## Patentansprüche

1. Verfahren zur Untersuchung der Lauffläche eines Reifens, dessen Profil durch das Zusammenfügen von Elementen gebildet wird, die in Umfangsrichtung nebeneinander angeordnet sind, die voneinander durch Begrenzungen mit gleichen Formen getrennt sind und die Grundstrukturen (A, B, C, U) in geringer Anzahl aufweisen, die auf exakte und bekannte Weise in eine Reihenfolge gebracht wurden, umfassend mindestens eine Grundstruktur (U), auf der Abnutzungsindikatoren (TU₁, TU₂, TU₃) angeordnet sind, die mit einem charakteristischen Punkt dieser Grundstruktur assoziiert sind, wobei:
- ein Bild der Lauffläche des zu untersuchenden Reifens hergestellt wird, wobei das Verfahren **dadurch gekennzeichnet ist, dass**
- die Abnutzungsindikatoren (TU₁, TU₂, TU₃) identifiziert werden, die auf dem Bild der Lauffläche des zu untersuchenden Reifens vorhanden sind,
- die Abnutzungsindikatoren in Untereinheiten zusammengefasst werden, die der Grundstruktur (U), die Abnutzungsindikatoren umfasst, entsprechen, und dass der charakteristische Punkt (P) jeder dieser Untereinheiten ermittelt wird,
- eine Reihenfolge von Abständen bestimmt wird, indem die Abstände zwischen den charakteristischen Punkten (P) jeder der Untereinheiten der Abnutzungsindikatoren, die auf der Oberfläche der zu untersuchenden Lauffläche identifiziert werden, berechnet werden,
- diese Reihenfolge von Abständen mit der bekannten Reihenfolge der Abstände zwischen den charakteristischen Punkten der Grundstrukturen in Deckung gebracht wird,
- auf die zu untersuchende Oberfläche die Form der Begrenzung zwischen den in Umfangsrichtung nebeneinander angeordneten Elementen gemäß der bekannten Positionierabfolge der Elemente projiziert wird.

2. Verfahren zur Untersuchung nach Anspruch 1, wobei eine einzige Grundstruktur Abnutzungsindikatoren umfasst.

3. Verfahren zur Untersuchung nach Anspruch 1, wobei die Ermittlung der Abnutzungsindikatoren ausgehend von Referenzminiaturansichten der Abnutzungsindikatoren erfolgt, die an die zu untersuchende Abmessung angepasst sind.

4. Verfahren zur Untersuchung nach Anspruch 1, wobei die Ermittlung der Abnutzungsindikatoren ausgehend von dem digitalen Modell erfolgt, das als Grundlage für die Definition des Profils des Reifens dient.

5. Verfahren zur Untersuchung, wobei die Suche nach Abnutzungsindikatoren auf schmale umlaufende Streifen beschränkt wird, die im Wesentlichen die Rillen des Profils umgeben, in denen sich die Abnutzungsindikatoren befinden.

6. Verfahren zur Untersuchung nach Anspruch 4, wobei das Bild der Abnutzungsindikatoren des digitalen Modells gemäß den Kalibrierungsparametern der Mittel zur bildlichen Erfassung der Lauffläche des zu untersuchenden Reifens verformt wird.

7. Verfahren zur Untersuchung nach Anspruch 4, wobei das Bild der Abnutzungsindikatoren des digitalen Modells verformt wird, indem eine affine Transformation angewendet wird.

8. Verfahren zur Untersuchung nach einem der Ansprüche 1 bis 6, wobei der Abstand zwischen der transversalen Position der charakteristischen Punkte der Elemente, die Abnutzungsindikatoren enthalten, bezogen auf eine Längsrichtung evaluiert wird, um den Höhenschlag des Reifens auf der Gesamtheit seines Umfangs zu bestimmen.

9. Verfahren zur Untersuchung nach Anspruch 7, wobei die transversale Position der Begrenzungen zwischen Elementen in Abhängigkeit von dem Wert des Höhenschlags des Reifens an diesem Punkt seines Umfangs korrigiert wird.

## Claims

1. Method for inspecting the tread of a tyre of which the design is formed by the assembly of elements that are juxtaposed circumferentially, separated from one another by boundaries with identical shapes, and having basic patterns (A, B, C, U), in reduced number sequenced in a precise and known manner, comprising at least one basic pattern (U) on which tread wear indicators (TU₁, TU₂, TU₃) are placed with which are associated a characteristic point of this basic pattern, in which:
- an image of the tyre tread to be inspected is produced, the method being **characterized in that**
- the tread wear indicators (TU₁, TU₂, TU₃) that are present on the image of the tyre tread to be inspected are identified,
- the tread wear indicators are grouped together by sub-sets corresponding to the basic pattern (U) comprising tread wear indicators and the characteristic point (P) of each of these sub-sets is determined,
- a sequence of distances is determined by computing the distances between the characteristics points (P) of each of the sub-sets of tread wear indicators identified on the tread surface to be inspected,
- this sequence of distances is made to coincide with the known sequence of the distances between the characteristic points of the basic patterns,
- the shape of the boundary between the elements that are juxtaposed circumferentially is projected onto the surface to be inspected according to the known sequence of positioning of the said elements.

2. Inspection method according to Claim 1, in which a single basic pattern includes tread wear indicators.

3. Inspection method according to Claim 1, in which the identification of the tread wear indicators is carried out on the basis of reference thumbnail images of the tread wear indicators, which thumbnail images are adapted to the dimension to be inspected.

4. Inspection method according to Claim 1, in which the identification of the tread wear indicators is carried out on the basis of the digital model used as a basis for the definition of the tyre design.

5. Inspection method in which the search for the tread wear indicators is limited to narrow circumferential strips substantially framing the grooves of the design in which the said tread wear indicators are situated.

6. Inspection method according to Claim 4, in which the image of the tread wear indicators of the digital model is deformed according to the calibration parameters of the means for acquiring the image of the tyre tread to be inspected.

7. Inspection method according to Claim 4, in which the image of the tread wear indicators of the digital model is deformed by applying an affine transformation.

8. Inspection method according to one of Claims 1 to 6, in which the distance between the transverse position of the characteristic points of the elements containing tread wear indicators and a longitudinal direction is evaluated so as to determine the run-out of the tyre over the whole of its circumference.

9. Inspection method according to Claim 7, in which the transverse position of the boundaries between elements is corrected as a function of the value of the run-out of the tyre at this point of its circumference.
